# EUROPÄISCHE PATENTSCHRIFT

(11) **EP 2 675 694 B1**
(45) Veröffentlichungstag und Bekanntmachung des Hinweises auf die Patenterteilung: **08.06.2016**
(21) Anmeldenummer: 12705640.6
(22) Anmeldetag: 15.02.2012
(51) Int. Cl.: B62D 21/15

(54) **FAHRZEUGKAROSSERIE**
VEHICLE BODY
CARROSSERIE DE VÉHICULE

(30) Priorität: 15.02.2011 DE 102011004105
(43) Veröffentlichungstag der Anmeldung: 25.12.2013
(73) Patentinhaber: Bayerische Motoren Werke Aktiengesellschaft, 80809 München (DE)
(72) Erfinder: HOISS, Franz, 82347 Bernried (DE); KERSTAN, Herwig, 82216 Maisach-Gernlinden (DE); RIEDL, Wilhelm, 85276 Pfaffenhofen (DE)
(86) Internationale Anmeldenummer: PCT/EP2012/052535
(87) Internationale Veröffentlichungsnummer: WO 2012/110529

(56) Entgegenhaltungen:
- EP-A1- 0 192 940
- EP-A2- 1 332 949
- WO-A2-2007/101285
- DE-A1-102004 001 747
- DE-A1-102004 036 332

## Beschreibung

Die vorliegende Erfindung bezieht sich auf eine Fahrzeugkarosserie und ein Fahrzeug mit einer derartigen Fahrzeugkarosserie.

DE 10 2004 036 332 A1 offenbart den Oberbegriff des Anspruchs 1.

Ein vorderer Bereich einer Fahrzeugkarosserie weist in der Regel zwei Längsträger auf, die sich in Fahrzeuglängsrichtung erstrecken, und einen Stoßfängerquerträger, der an den Enden der Fahrzeuglängsträger fixiert ist. Der Stoßfängerquerträger erstreckt sich im Wesentlichen über die gesamte Fahrzeugbreite oder überkragt die Längsträger zumindest. Die Längsträger verlaufen gewöhnlich innerhalb der linken und rechten Radaufhängung bzw. innerhalb des linken und rechten Radhauses und außerhalb einer Antriebseinheit. Bei einer Frontalkollision mit geringer Überdeckung trifft das Fahrzeug außerhalb des jeweiligen Längsträgers auf ein Hindernis. In jüngerer Zeit gibt es Bestrebungen, die Energieabsorptionsfähigkeit einer Fahrzeugkarosserie bei einer Frontalkollision mit geringer Überdeckung zu verbessern. Gemäß der WO 2009/072450 A1 sind weitere längsverlaufende Karosserierahmenelemente vorgesehen, die außerhalb der Längsträger angeordnet sind und sich von einem Stoßfängerquerträger über ein Radhaus bis zu einer A-Säule der Karosserie erstrecken. Damit wird Energie, insbesondere bei einem Aufprall mit geringer Überdeckung, nicht nur von dem herkömmlichen Längsträger aufgenommen, sondern auch von dem Stoßfängerquerträger über das Radhaus bis in die A-Säule eingeleitet.

Es ist nunmehr die Aufgabe der vorliegenden Erfindung eine Fahrzeugkarosserie zu schaffen, die im Falle einer Frontalkollision mit geringer Überdeckung eine verbesserte Energieeinleitung in einen Längsträger ermöglicht.

Diese Aufgabe wird durch eine Fahrzeugkarosserie mit den Merkmalen von Patentanspruch 1 gelöst.

Insbesondere weist eine erfindungsgemäße Fahrzeugkarosserie einen Längsträger und einen Stoßfängerquerträger auf. Ferner hat die Fahrzeugkarosserie einen Kragträger, der quer zu dem Längsträger entlang einer Fahrzeugquerachse verläuft und der an dem Längsträger drehmomentfest fixiert ist. Dabei ist der Kragträger so angeordnet, dass er in einen Zwischenraum zwischen einer Radaufnahme und dem Stoßfängerquerträger hinein ragt. Damit ist impliziert, dass der Stoßfängerquerträger den Längsträger in Querrichtung der Karosserie überkragt.

Ein Kragträger im Sinne der Erfindung ist damit ein einseitig fixierter Träger. Der Kragträger ragt von dem Längsträger in Richtung einer Fahrzeugaußenseite vor. Der Stoßfängerquerträger ist bevorzugt an einem vorderen Ende des Längsträgers fixiert.

Gemäß der erfindungsgemäßen Anordnung kann bei einer Frontalkollision der Fahrzeugkarosserie mit geringer Überdeckung der Kragträger zusätzlich zu dem Stoßfängerquerträger Energie aufnehmen und diese durch die Fixierung an dem Längsträger in den Längsträger hinein ableiten.

Wenn ein bestimmter Abstand zwischen dem Stoßfängerquerträger und dem Kragträger besteht, wird dabei zunächst der Stoßfängerquerträger verformt bis er auf den Kragträger trifft und dieser dann den Stoßfängerquerträger entsprechend abstützt und die Energie in den Längsträger hinein ableitet.

Eine Frontalkollision mit geringer Überdeckung im Sinne der vorliegenden Erfindung ist eine Frontalkollision der Fahrzeugkarosserie mit einem Hindernis, wobei das Hindernis sich im Wesentlichen außerhalb des Längsträgers befindet, das heißt auf einer Seite des Längsträgers, auf der sich eine Radaufnahme befindet.

Der Ausdruck "im Wesentlichen quer zu dem Längsträger" bedeutet, dass der Kragträger auch abweichend von der Fahrzeugquerachse verlaufen kann, er sich aber im Wesentlichen entlang der Fahrzeugquerachse orientiert.

Bei dem Stoßfängerquerträger kann es sich um einen hinteren oder einen vorderen Stoßfängerquerträger der Fahrzeugkarosserie handeln.

Bei der Radaufnahme kann es sich um eine linke oder rechte Radaufnahme handeln.

Ferner kann der Längsträger ein linker oder rechter Längsträger sein.

Gemäß der vorliegenden Erfindung kann der Kragträger einer Energieaufnahme bei einer Frontalkollision mit geringer Überdeckung und einer Energieeinleitung in den Längsträger dienen.

Eine Frontalkollision mit geringer Überdeckung kann eine Überdeckung der Fahrzeugkarosserie in Fahrzeugfahrrichtung von ungefähr 25 % oder weniger bedeuten.

Gemäß einer Weiterbildung der vorliegenden Erfindung ist der Kragträger ein von dem Längsträger separat gefertigtes Karosserieelement. Insbesondere kann der Kragträger als separates Karosserieelement durch eine Schweißverbindung, eine Nietverbindung und/oder eine Schraubverbindung mit dem Längsträger verbunden sein.

Damit kann die vorliegende Erfindung auf bestehende bzw. bekannte Fahrzeugkarosserien angewandt werden, wobei lediglich der zusätzliche Kragträger an dem bestehenden Längsträger fixiert ist.

Ferner kann gemäß der vorliegenden Erfindung zwischen einem freien Ende des Kragträgers und einem Stoßfängerquerträger ein schaltbares Strukturelement angeordnet sein.

Das freie Ende des Kragträgers ist das Ende des Kragträgers, das nicht an dem Längsträger fixiert ist. Es ist also das Ende des Kragträgers, das nicht eingespannt ist.

Ein schaltbares Strukturelement ist ein Karosseriestrukturelement, das abhängig von einer bestimmten Rahmenbedingung, wie beispielsweise eine Stärke eines Aufpralls, unterschiedliche, umschaltbare Eigenschaften aufweist.

Insbesondere kann bei der erfindungsgemäßen Fahrzeugkarosserie das schaltbare Strukturelement derart ausgebildet sein, dass es im Fall eines Aufpralls mit einer Geschwindigkeit, die größer oder gleich einer Schwellwertgeschwindigkeit ist, im Wesentlichen starr ist, und dass es im Fall eines Aufpralls mit einer Geschwindigkeit die kleiner als die Schwellwertgeschwindigkeit ist, beweglich ist. Der Begriff "im Wesentlichen starr" umfasst in diesem Zusammenhang, dass das schaltbare Strukturelement nicht beweglich ist, kann aber durchaus eine Deformierbarkeit auf hohem Lastniveau umfassen.

Damit wird bei einer Frontalkollision unterhalb der Schwellwertgeschwindigkeit zunächst lediglich der Stoßfängerquerträger beansprucht, ohne dass Energie über den Kragträger in den Längsträger eingeleitet werden kann. Im Falle einer Geschwindigkeit, die größer oder gleich der Schwellwertgeschwindigkeit ist, wird die Energie von dem Stoßfängerquerträger direkt auf das freie Ende des Kragträgers und somit auf den Längsträger übertragen.

Gemäß einer weiteren Weiterbildung der vorliegenden Fahrzeugkarosserie kann auf einer zu dem Kragträger entgegengesetzten Seite des Längsträgers ein Abstützelement derart angeordnet sein, dass es den Längsträger bei Beanspruchung des Kragträgers durch eine Frontalkollision seitlich abstützt.

Insbesondere bei der vorstehend beschriebenen Frontalkollision mit geringer Überdeckung wird wie erläutert Energie über den Kragträger in den Längsträger eingeleitet. Insbesondere wird auf die Verbindung zwischen Kragträger und Längsträger ein Drehmoment aufgebracht, das eine seitliche Verbiegung oder ein Einknicken des Längsträgers bewirken kann. Das Abstützelement kann dieser seitlichen Verformung oder dem seitlichen Einknickens des Längsträgers entgegenwirken, indem es den Längsträger auf der anderen Seite, nämlich der Fahrzeuginnenseite, seitlich abstützt.

Das Abstützelement kann den Längsträger zum Beispiel an einer Antriebseinheit, wie beispielsweise einem Motorblock, abstützen.

Dadurch ist die Energieabsorptionsfähigkeit des Längsträgers insgesamt erhöht und die Antriebseinheit nimmt ebenso Kollisionsenergie auf.

Gemäß einer Weiterbildung der vorliegenden Erfindung kann die Fahrzeugkarosserie ein Zugelement aufweisen, das ein freies Ende des Kragträgers mit einem Stoßfängerquerträger im Bereich des Längsträgers verbindet.

Zugelement im Sinne der Erfindung bedeutet, dass es sich dabei um ein Strukturelement handelt, das im Wesentlichen nur auf Zug beanspruchbar ist und auf Druck keine nennenswerte Energie aufnehmen kann. Ein Ende des Zugelements ist mit dem freien Ende des Kragträgers verbunden. Das andere Ende des Zugelements ist mit dem Stoßfängerquerträger im Bereich des Längsträgers verbunden. Damit verläuft das Zugelement von dem freien Ende des Kragträgers schräg in Richtung des Längsträgers nach vorne. "Im Bereich des Längsträgers" bedeutet, dass das Zugelement in einem Bereich an dem Stoßfängerquerträger fixiert ist, an dem der Stoßfängerquerträger an den Längsträger angebracht ist.

Wird der Kragträger im Falle einer Frontalkollision mit geringer Überdeckung beansprucht, wird das Zugelement, das am Stoßfängerquerträger befestigt ist, auf Zug beansprucht und ermöglicht eine höhere Energieaufnahme des Kragträgers bzw. des Längsträgers.

Damit ermöglicht das Zugelement eine Verbesserung der Energieabsorption bei einer Frontalkollision mit geringer Überdeckung.

Gemäß einer bevorzugten Weiterbildung der Erfindung hat die Fahrzeugkarosserie einen linken und einen rechten Längsträger sowie einen linken und einen rechten Kragträger.

Der linke Kragträger ragt von dem linken Längsträger in Fahrzeugquerrichtung nach links vor, wohingegen der rechte Kragträger von dem rechten Längsträger in Fahrzeugquerrichtung nach rechts vorragt.

Damit kann die Fahrzeugkarosserie sowohl bei einer Frontalkollision mit geringer Überdeckung auf der linken Seite, d.h. einer linken Frontalkollision, als auch bei einer Frontalkollision mit geringer Überdeckung auf der rechten Seite, d.h. einer rechten Frontalkollision, ein verbessertes Energieabsorptionsvermögen aufweisen.

Gemäß einer bevorzugten Weiterbildung der vorliegenden Erfindung, insbesondere der Fahrzeugkarosserie mit einem linken und einem rechten Längsträger und einem linken und einem rechten Kragträger, ist das freie Ende des rechten Kragträgers mittels eines Zugelements mit einem freien Ende des linken Kragträgers verbunden. Ferner verläuft das Zugelement dieser Weiterbildung um die vorderen Enden des rechten und linken Längsträgers.

Damit wird bei einer linken Frontalkollision mit geringer Überdeckung das Zugelement derart beansprucht, dass es an dem freien Ende des rechten Kragträgers zieht. Damit wirkt bei einer linken Frontalkollision der rechte Kragträger, und damit auch der rechte Längsträger, als zusätzliche Abstützung und kann bei Beanspruchung des linken Kragträgers zusätzlich Energie absorbieren.

Damit kann bei einer Frontalkollision mit geringer Überdeckung eine Energieabsorptionsfähigkeit der Fahrzeugkarosserie weiter erhöht werden.

Gemäß einer Weiterbildung der Fahrzeugkarosserie bei der das Zugelement die freien Enden des linken und des rechten Kragträgers miteinander verbindet, verläuft das Zugelement um den gesamten Stoßfängerquerträger. Hierdurch wirkt zusätzlich die Verformung des Stoßfängerquerträgers bei einer Frontalkollision mit geringer Überdeckung auf das Zugelement in Form einer Zugbeanspruchung des Zugelements, so dass eine Energieabsorption der Fahrzeugkarosserie weiter verbessert ist. Wie vorstehend beschrieben ist, wird somit im Falle einer linken Frontalkollision Energie auch über den rechten Längsträger abgeleitet.

Gemäß einer weiteren Weiterbildung der Fahrzeugkarosserie der vorliegenden Erfindung ist das vordere Ende des rechten Kragträgers mit einem vorderen Ende eines rechten Stützträgers eines rechten Radhauses mittels eines rechten Radhauszugelements verbunden. Ferner ist das vordere Ende des linken Kragträgers mit einem vorderen Ende eines linken Stützträgers eines linken Radhauses mittels eines linken Radhauszugelements verbunden.

Somit wird bei einer rechten Frontalkollision das linke Radhauszugelement auf Zug beansprucht, so dass der linke Kragträger als auch der linke Stützträger des linken Radhauses Energie absorbieren können. Umgekehrt wird bei einer linken Frontalkollision das rechte Radhauszugelement auf Zug beansprucht, so dass der rechte Kragträger und der rechte Stützträger des rechten Radhauses Energie absorbieren können.

Die vorstehend beschriebenen Zugelemente einschließlich der Radhauszugelemente können Seile oder Bänder sein. Die Bänder können aus einem Gewebe gebildet sein.
Fig. 1 zeigt eine schematische Draufsicht eines vorderen Bereichs einer Fahrzeugkarosserie gemäß einem ersten Ausführungsbeispiel der vorliegenden Erfindung.
Fig. 2 zeigt eine schematische Draufsicht eines vorderen Bereichs einer Fahrzeugkarosserie gemäß einem zweiten Ausführungsbeispiel der vorliegenden Erfindung.
Fig. 3 zeigt eine schematische Draufsicht eines vorderen Bereichs einer Fahrzeugkarosserie gemäß einem dritten Ausführungsbeispiel der vorliegenden Erfindung.
Fig. 4 zeigt eine schematische Draufsicht eines vorderen Bereichs einer Fahrzeugkarosserie gemäß einem vierten Ausführungsbeispiel der vorliegenden Erfindung.
Fig. 5 zeigt eine schematische Draufsicht eines vorderen Bereichs einer Fahrzeugkarosserie gemäß einem fünften Ausführungsbeispiel der vorliegenden Erfindung.
Fig. 6 zeigt eine schematische Draufsicht eines vorderen Bereichs einer Fahrzeugkarosserie gemäß einem sechsten Ausführungsbeispiel der vorliegenden Erfindung.

Im Folgenden sind Ausführungsbeispiele der vorliegenden Erfindung anhand der Figuren in Einzelheiten beschrieben.

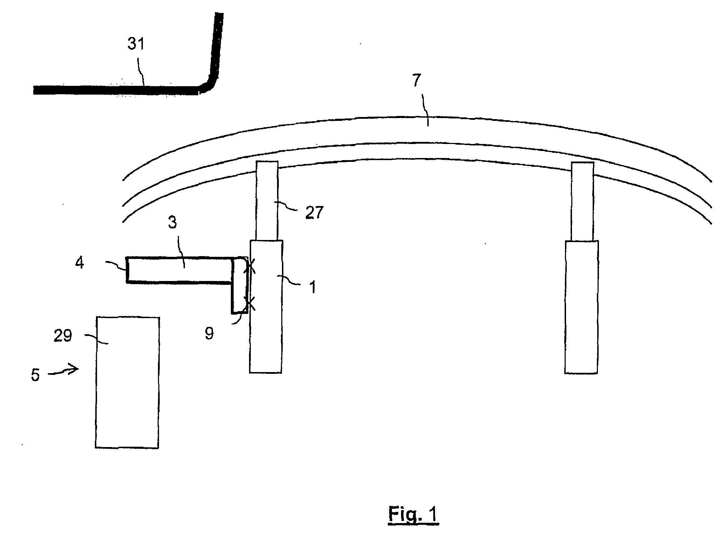

Fig. 1 zeigt eine Draufsicht eines vorderen Bereichs einer Fahrzeugkarosserie gemäß einem ersten Ausführungsbeispiels der vorliegenden Erfindung. Insbesondere sind ein linker Längsträger 1, ein linker Kragträger 3 mit einem freien Ende 4, ein linker Radaufnahmebereich 5 und ein Stoßfängerquerträger 7 gezeigt. Der Kragträger 3 ist an einer linken Seite des Längsträgers 1, d.h. der Seite die einer Radaufnahme 5 zugewandt ist, mittels einer Befestigungseinrichtung 9 fixiert. Der Stoßfängerquerträger ist an einer Deformationseinheit 27, die das vordere Ende des Längsträgers 1 bildet, fixiert. Im Bereich der Radaufnahme 5 ist ein linkes Rad 29 angeordnet. Der Kragträger 3 ragt in den Zwischenraum zwischen dem Stoßfängerquerträger 7 und dem Rad 29 hinein.

Ferner ist in Fig. 1 ein Hindernis 31 gezeigt, das gegenüber der Fahrzeugkarosserie eine geringe Überdeckung aufweist. Insbesondere ist die Überdeckung des Hindernisses 31 mit der Fahrzeugkarosserie außerhalb des linken Längsträgers 1 und beträgt ungefähr 25%.

Bei einem Aufprall des Fahrzeugs auf das gezeigte Hindernis 31 wird zunächst der linke äußere Bereich des Stoßfängerquerträgers 7 in Richtung des Kragträgers 3 bzw. des Rads 29 verformt, bis er auf den Kragträger 3 trifft. Durch die drehmomentfeste Fixierung des Kragträgers 3 am Längsträger 1 wird die Kollisionsenergie über den Kragträger 3 in den Längsträger 1 eingeleitet.

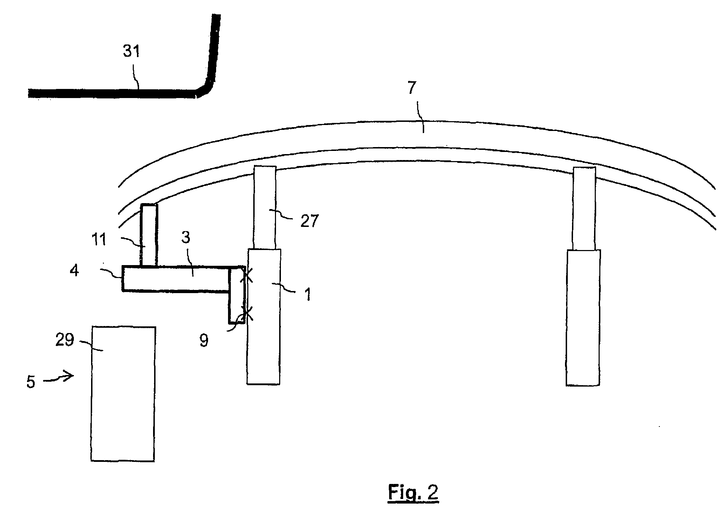

Fig. 2 zeigt eine schematische Draufsicht eines vorderen Bereichs einer Fahrzeugkarosserie gemäß einem zweiten Aufführungsbeispiel der vorliegenden Erfindung. Im Folgenden sind im Wesentlichen die Merkmale, die sich von den Merkmalen des ersten Ausführungsbeispiels unterscheiden, beschrieben.

Wie in Fig. 2 zu sehen ist, ist im Bereich eines freien Endes 4 des Kragträgers 3 ein Strukturelement 11 angeordnet. Insbesondere ist das Strukturelement 11 zwischen dem Stoßfängerquerträger 7 und dem Ende 4 des Kragträgers 3 angeordnet und fixiert. Das Strukturelement 11 erstreckt sich im Wesentlichen in Fahrzeuglängsrichtung.

Im Falle einer linken Frontalkollision mit einem Hindernis 31 wird ein linker Bereich des Stoßfängerquerträgers 7 gegen das Strukturelement 11 gedrückt und übt eine Kraft hierauf aus. Das Strukturelement 11 übt wiederum eine Kraft auf das Ende 4 des Kragträgers 3 aus. Somit wird Energie über den Weg des Strukturelements 4 und den Kragträger 3 in den Längsträger 1 eingeleitet.

Das Strukturelement 11 ist schaltbar ausgeführt. Insbesondere ist es oberhalb einer Schwellwertgeschwindigkeit der Fahrzeugkarosserie im Wesentlichen starr, so dass im Falle der Frontalkollision eine kontrollierte Energieübertragung von dem Stoßfängerquerträger 7 auf den Kragträger 3 erfolgt. "Im Wesentlichen starr" bedeutet in diesem Zusammenhang, dass das Strukturelement 11 auf einem hohen Lastniveau von z.B. 40 bis 80 kN, d.h. unter einer definierten Krafteinwirkung, deformierbar ist.

Bei einer Geschwindigkeit der Fahrzeugkarosserie, die gleich oder geringer als die Schwellwertgeschwindigkeit ist, ist das Strukturelement in irgendeiner Art und Weise zumindest in seine Längsrichtung, d.h. in Fahrzeuglängsrichtung, beweglich oder flexibel, so dass bei der Frontalkollision zunächst keine Kollisionsenergie auf den Kragträger 3 übertragen werden kann und lediglich der Stoßfängerquerträger 7 verformt wird.

Damit können bei Geschwindigkeiten von gleich und kleiner der Schwellwertgeschwindigkeit Schäden an dem Längsträger vermieden werden.

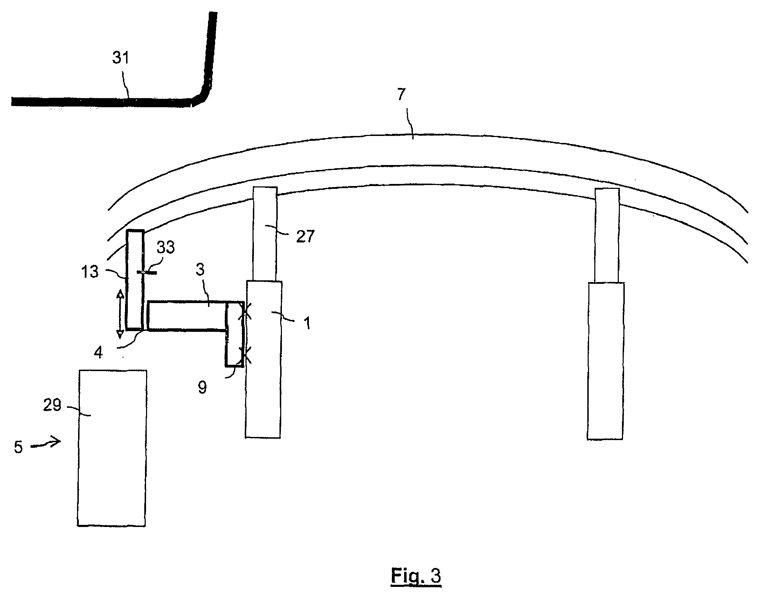

Fig. 3 zeigt eine schematische Draufsicht eines vorderen Bereichs einer Fahrzeugkarosserie gemäß einem dritten Ausführungsbeispiel der vorliegenden Erfindung. Im Folgenden sind insbesondere die Unterschiede gegenüber dem ersten und zweiten Ausführungsbeispiel beschrieben, wohingegen die Beschreibung gleicher Merkmale weggelassen wurde.

Fig. 3 zeigt ein Strukturelement 13, das an einem vorderen Ende 4 eines Kragträgers 3 befestigt ist. Das Strukturelement 13 erstreckt sich in Fahrzeuglängsrichtung und ist zwischen dem vorderen Ende 4 und einem Stoßfängerquerträger 7 angeordnet. Das Strukturelement 13 ist gegenüber dem vorderen Ende 4 des Kragträgers 3 in Fahrzeuglängsrichtung verschiebbar oder beweglich ausgebildet. Insbesondere kann das Strukturelement 13 soweit gegenüber dem Kragträger 3 verschoben werden, bis ein Anschlag 33 auf das vordere Ende 4 des Kragträgers 3 trifft. Trifft der Anschlag 33 auf das vordere Ende 4 des Kragträgers 3, stellt das Strukturelement 13 eine im Wesentlichen starre Verbindung gegenüber dem Kragträger 3 dar. "Im Wesentlichen starr" bedeutet in diesem Zusammenhang, dass das Strukturelement 13 auf einem hohen Lastniveau von z.B. 40 bis 80 kN, d.h. unter einer definierten Krafteinwirkung, deformierbar ist.

Damit wird im Falle einer Frontalkollision mit einem Hindernis 31 das Strukturelement 13 bis zu einem gewissen Ausmaß verschoben, ohne dass das Strukturelement 13 eine Last aufnehmen kann, während der linke Bereich des Stoßfängerquerträgers 7 in Richtung des linken Fahrzeugrads 29 verformt wird. Sobald der Anschlag 33 auf den Kragträger 3 trifft, wird die Kollisionsenergie direkt von dem Stoßfängerquerträger 7 über das Strukturelement 13 auf den Kragträger 3 und damit auf einen linken Längsträger 1 übertragen.

Die Verbindung des Strukturelements 13 mit dem Stoßfängerquerträger 7 ermöglicht dabei eine definierte oder zumindest geführte Verformung des Stoßfängerquerträgers 7 in Richtung des Kragträgers 3 im Kollisionsfall. Eine Verformung des Stoßfängerquerträgers 7 in eine Richtung unterhalb oder oberhalb des Kragträgers 3 wird damit vermieden.

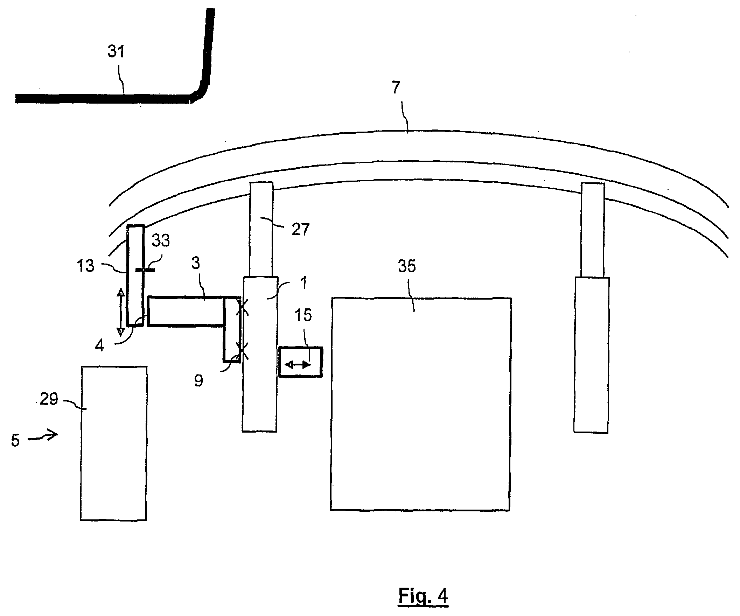

Fig. 4 zeigt eine schematische Draufsicht eines vorderen Bereichs einer Fahrzeugkarosserie gemäß einem vierten Ausführungsbeispiel der vorliegenden Erfindung. Das vierte Ausführungsbeispiel stellt eine Weiterbildung des dritten Ausführungsbeispiels dar, wobei im Folgenden nur die Unterschiede gegenüber dem dritten Ausführungsbeispiel beschrieben sind und die Erläuterung der zu dem dritten Ausführungsbeispiel identischen Merkmale weggelassen ist.

Gemäß dem vierten Ausführungsbeispiel ist ein Abstützstrukturelement 15 zwischen einem linken Längsträger 1 und einer Antriebseinheit 35, wie beispielsweise einer Verbrennungsmaschine, angeordnet ist. Ein Strukturelement 13 und ein Kragträger 3 sind analog dem dritten Ausführungsbeispiel angeordnet.

Im Falle einer linken Frontalkollision 31 mit geringer Überdeckung wird Energie von einem Stoßfängerquerträger 7 über das Strukturelement 13 und den Kragträger 3 in den linken Längsträger 1 eingeleitet. Dabei wird insbesondere ein Drehmoment auf den linken Längsträger 1 aufgebracht, wie in Bezug auf das erste Ausführungsbeispiel beschrieben ist. Dieses Drehmoment kann zu einem Einknicken/ Verbiegen des linken Längsträgers 1 in Richtung der Antriebseinheit 35 führen. Im Falle des vierten Ausführungsbeispiels wird dieses Einknicken des linken Längsträgers 1 durch das Abstützelement 15 verhindert oder zumindest abgeschwächt. Ferner wird durch das Abstützelement 15 Kollisionsenergie auf die Antriebseinheit 35 übertragen bzw. eine Energieabsorption durch den Längsträger 1 in Folge seines Nichteinknickens verbessert.

Das Abstützelement 15 kann auch mit den anderen vorstehend und nachstehend beschriebenen Ausführungsbeispielen kombiniert sein.

Das erste, zweite und dritte Ausführungsbeispiel sind insbesondere in Bezug auf einen linken vorderen Bereich einer Fahrzeugkarosserie und einer linken Frontalkollision beschrieben. Diese Ausführungsbeispiele beziehen sich selbstverständlich analog auch auf einen rechten vorderen Bereich einer Fahrzeugkarosserie und eine rechte Frontalkollision.

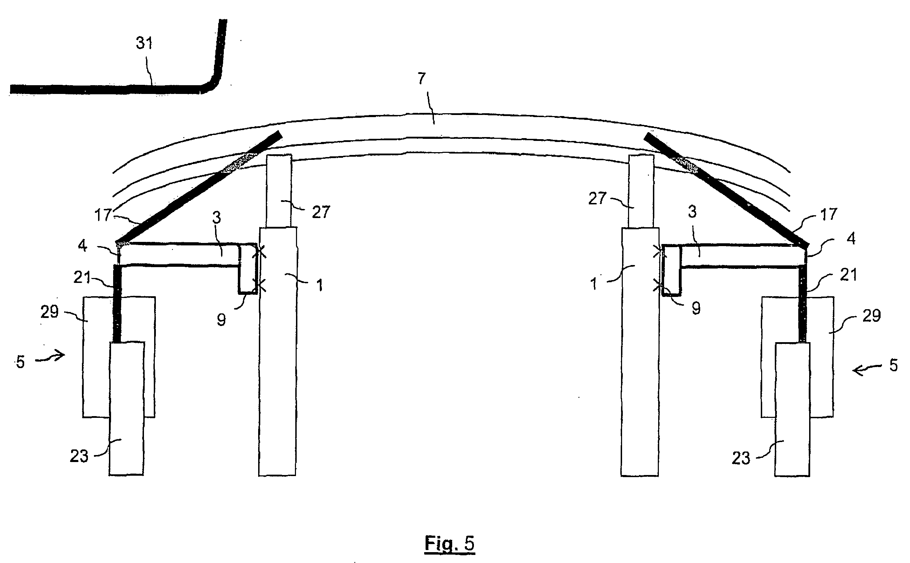

Fig. 5 zeigt eine schematische Draufsicht eines vorderen Bereichs einer Fahrzeugkarosserie gemäß einem fünften Ausführungsbeispiel der vorliegenden Erfindung. Im Folgenden sind insbesondere die Unterschiede des fünften Ausführungsbeispiels gegenüber dem ersten Ausführungsbeispiel beschrieben.

Insbesondere sind in Fig. 5 der linke und rechte vordere Bereich der Fahrzeugkarosserie gezeigt. Hieraus ist ersichtlich, dass der Aufbau der vorliegenden Erfindung an einer Fahrzeugkarosserie vollständig symmetrisch erfolgen kann.

Insbesondere weist die Fahrzeugkarosserie einen rechten und linken Längsträger 1 mit einer rechten bzw. einer linken Deformationseinheit 27, einen rechten und linken Kragträger 3 mit einer rechten bzw. linken Befestigungseinrichtung 9, eine rechte und linke Radaufnahme 5, ein rechtes und linkes Rad 29 sowie einen Stoßfängerquerträger 7 auf.

Ferner sind, wie in Fig. 5 gezeigt ist, ein linkes und ein rechtes Zugband 17 zwischen dem linken bzw. rechten Kragträger 3 und dem Stoßfängerquerträger 7 angeordnet. Insbesondere ist ein hinteres Ende des linken bzw. rechten Zugbands 17 mit einem freien Ende 4 des linken bzw. rechten Kragträgers 3 verbunden und ist ein vorderes Ende des linken bzw. rechten Zugbands 17 mit dem Stoßfängerquerträger 7 verbunden. Insbesondere sind die vorderen Enden des linken bzw. rechten Zugbandes 17 mit dem Stoßfängerquerträger 7 in einem Bereich des linken bzw. rechten Längsträgers 1 fixiert, d.h. in einem Bereich an dem der Stoßfängerquerträger 7 an dem linken bzw. rechten Längsträger 1 montiert ist.

Des Weiteren hat die Fahrzeugkarosserie ein linkes Radhauszugband 21 und ein rechtes Radhauszugband 21. Ein vorderes Ende des linken Radhauszugbands 21 ist mit dem freien Ende 4 des linken Kragträgers 3 verbunden. Ein hinteres Ende des linken Radhauszugbands 21 ist mit einem freien vorderen Ende eines linken Radhausträgers 23 verbunden. Ein vorderes Ende eines rechten Radhauszugbands 21 ist mit dem freien Ende 4 des rechten Kragträgers 3 verbunden. Ein hinteres Ende des rechten Radhauszugbands 21 ist mit einem freien vorderen Ende eines rechten Radhausträgers 23 verbunden.

Im Falle einer linken Frontalkollision mit einem Hindernis 31 werden das rechte Zugband 17 sowie das rechte Radhauszugband 21 auf Zug beansprucht und bewirken eine zusätzlich Energieabsorption der linken Frontalkollision auf der rechten Seite der Fahrzeugkarosserie.

Ferner wird im Falle der linken Frontalkollision ebenso das linke Zugband 17 bei Beanspruchung des linken Kragträgers 3 auf Zug beansprucht, wobei das auf den linken Längsträger 1 wirkende Moment, insbesondere an der Befestigungseinrichtung 9 des Kragträgers 3, verringert wird und die Energieabsorption insgesamt erhöht wird.

Im Falle einer rechten Frontalkollision ist die Beanspruchung der entsprechenden Elemente analog.

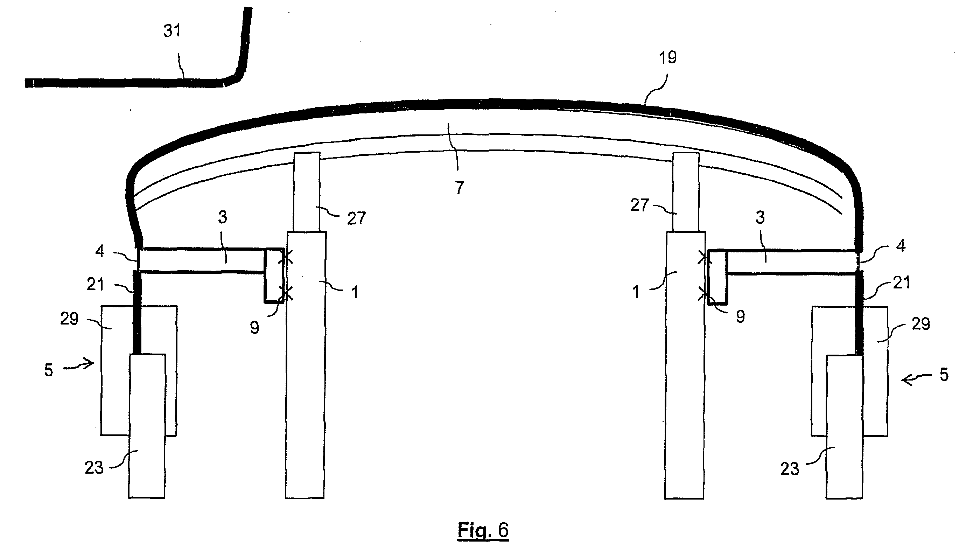

Fig. 6 zeigt eine Draufsicht eines vorderen Bereichs einer Fahrzeugkarosserie gemäß einem sechsten Ausführungsbeispiel der vorliegenden Erfindung. Insbesondere stellt das sechste Ausführungsbeispiel der vorliegenden Erfindung eine Abwandlung des fünften Ausführungsbeispiel der vorliegenden Erfindung dar, so dass im Folgenden lediglich die Unterschiede im Vergleich zu dem fünften Ausführungsbeispiel beschrieben sind.

Im Gegensatz zu dem fünften Ausführungsbeispiel weist die Fahrzeugkarosserie des sechsten Ausführungsbeispiels an Stelle des linken und rechten Zugbands 17 ein einziges Zugband 19 auf. Ein linkes Ende des Zugbands 19 ist mit einem freien Ende 4 eines linken Kragträgers 3 verbunden und ein rechtes Ende des Zugbands 19 ist mit einem freien Ende 4 eines rechten Kragträgers 3 verbunden. Das Zugband 19 ist dabei so angeordnet, dass es von dem linken Kragträger 3 um einen gesamten Stoßfängerquerträger 7 zu dem rechten Kragträger 3 verläuft.

Die Zugbänder des fünften und sechsten Ausführungsbeispiels können aus einem Metallband oder Metallseil ausgebildet sein. Alternativ können die Zugbänder auch aus einem nichtmetallischen Gewebeband ausgebildet sein. Dieses Gewebeband kann mit Kunststoff ummantelt sein.

In einer Abwandlung des fünften und sechsten Ausführungsbeispiels kann auch das linke und rechte Radhauszugband 21 weggelassen sein.

In einer weiteren Abwandlung des fünften und sechsten Ausführungsbeispiels können auch das rechte und linke Zugband 17 bzw. das Zugband 19 weggelassen sein.

Die in dem fünften und sechsten Ausführungsbeispiel beschriebenen Zugbänder 17 und 19 sowie die Radhauszugbänder 21 können auch mit den ersten, zweiten und dritten Ausführungsbeispiel kombiniert sein.

## Patentansprüche

1. Fahrzeugkarosserie mit
einem Längsträger (1),
einem Kragträger (3), der im Wesentlichen quer zu dem Längsträger (1) verläuft, wobei der Kragträger (3) so angeordnet ist, dass er in einen Zwischenraum zwischen einer Radaufnahme (5) und einem Stoßfängerquerträger (7) hineinragt,
**dadurch gekennzeichnet, dass**
der Kragträger (3) entlang einer Fahrzeugquerachse verläuft und an dem Längsträger (1) drehmomentfest fixiert ist, wobei der Kragträger (3) derart ausgebildet und angeordnet ist, dass er bei einer Frontalkollision mit geringer Überdeckung Energie aufnimmt und in den Längsträger (1) einleitet.

2. Fahrzeugkarosserie nach Anspruch 1, wobei der Kragträger (3) ein von dem Längsträger (1) separat gefertigtes Karosserieelement ist und beispielsweise durch eine Schweißverbindung (9), eine Nietverbindung und/oder eine Schraubverbindung mit dem Längsträger (1) verbunden ist.

3. Fahrzeugkarosserie nach Anspruch 1 oder 2, wobei zwischen einem freien Ende (4) des Kragträgers (3) und einem Stoßfängerquerträger (7) ein schaltbares Strukturelement (11; 13) angeordnet ist.

4. Fahrzeugkarosserie nach Anspruch 3, wobei das schaltbare Strukturelement (11; 13) derart ausgebildet ist, dass es im Fall eines Aufpralls mit einer Geschwindigkeit, die größer oder gleich einer Schwellwertgeschwindigkeit ist, starr ist und dass es im Fall eines Aufpralls mit einer Geschwindigkeit, die kleiner als die Schwellwertgeschwindigkeit ist, beweglich ist.

5. Fahrzeugkarosserie nach einem der vorhergehenden Ansprüche, wobei auf einer zu dem Kragträger (3) entgegengesetzten Seite des Längsträgers (1) ein Abstützelement (15) derart angeordnet ist, dass es den Längsträger (1) bei Beanspruchung des Kragträgers (3) durch eine Frontalkollision seitlich abstützt.

6. Fahrzeugkarosserie nach einem der vorhergehenden Ansprüche, wobei ein Zugelement (17) ein freies Ende (4) des Kragträgers (3) mit dem Stoßfängerquerträger (7) im Bereich des Längsträgers (1) verbindet.

7. Fahrzeugkarosserie nach einem der vorhergehenden Ansprüche mit einem linken und rechten Längsträger (1, 1) sowie einem linken und rechten Kragträger (3, 3).

8. Fahrzeugkarosserie nach Anspruch 7, wobei ein freies Ende (4) des rechten Kragträgers (3) mittels eines Zugelements (19) mit einem freien Ende (4) des linken Kragträgers (3) verbunden ist und das Zugelement (19) zumindest um die vorderen Enden des rechten und linken Längsträgers (1, 1) verläuft.

9. Fahrzeugkarosserie nach Anspruch 8, wobei das Zugelement (19) um den gesamten Stoßfängerquerträger (17) verläuft.

10. Fahrzeugkarosserie nach einem der Ansprüche 7 bis 9, wobei das vordere Ende (4) des rechten bzw. linken Kragträgers (3) mit einem vorderen Ende (4) eines rechten bzw. linken Stützträgers (23) eines rechten bzw. linken Radhauses (5) mittels eines rechten bzw. linken Radhauszugelements (21) verbunden ist.

11. Kraftfahrzeug mit einer Fahrzeugkarosserie gemäß einem der vorhergehenden Ansprüche.

## Claims

1. A vehicle body having
a side member (1),
a cantilever element (3) which extends substantially transversely to the side member (1),
wherein the cantilever element (3) being arranged such that it projects into a gap between a wheel mount (5) and a bumper cross member (7),
**characterised in that**
the cantilever element (3) extends along a transverse axis of the vehicle and is fixed to the side member (1) in a torque-resistant manner, the cantilever element (3) being configured and arranged such that, in the event of a frontal collision with a small overlap, it absorbs energy and introduces the energy into the side member (1).

2. A vehicle body according to claim 1, wherein the cantilever element (3) is a body element which is produced separately from the side member (1) and is connected to the side member (1) by, for example, a welded joint (9), a riveted joint and/or by a threaded joint.

3. A vehicle body according to claim 1 or claim 2, wherein a switchable structural element (11; 13) is arranged between a free end (4) of the cantilever element (3) and a bumper cross member (7).

4. A vehicle body according to claim 3, wherein the switchable structural element (11; 13) is configured such that it is rigid in the event of an impact at a speed which is greater than or equal to a threshold speed, and such that it is movable in the event of an impact at a speed which is less than the threshold speed.

5. A vehicle body according to any one of the preceding claims, wherein a support element (15) is arranged on a side of the side member (1) opposite the cantilever element (3) such that it laterally supports the side member (1) when the cantilever element (3) is stressed due to a frontal collision.

6. A vehicle body according to any one of the preceding claims, wherein a tension element (17) connects a free end (4) of the cantilever element (3) to the bumper cross member (7) in the region of the side member (1).

7. A vehicle body according to any one of the preceding claims having a left and a right side member (1, 1), and also a left and a right cantilever element (3, 3).

8. A vehicle body according to claim 7, wherein a free end (4) of the right cantilever element (3) is connected by a tension element (19) to a free end (4) of the left cantilever element (3) and the tension element (19) extends at least around the front ends of the right and the left side member (1, 1).

9. A vehicle body according to claim 8, wherein the tension element (19) extends aground the entire bumper cross member (17).

10. A vehicle body according to any one of claims 7 to 9, wherein the front end (4) of the right and left cantilever element (3) is connected to a front end (4) of a right and left support carrier (23) of a right and left wheel housing (5) by means of a right and left wheel housing tension element (21).

11. A motor vehicle having a body according to any one of the preceding claims.

## Revendications

1. Carrosserie de véhicule comprenant :
une poutre longitudinale (1),
une poutre en porte-à-faux (3) qui s'étend essentiellement transversalement à la poutre longitudinale (1),
la poutre en porte-à-faux (3) étant montée de façon à pénétrer dans un espace intermédiaire entre un logement de réception de roue (5) et un support transversal de pare-choc (7),
**caractérisé en ce que**
la poutre en porte-à-faux (3) s'étend le long de l'axe transversal du véhicule et est fixé de façon à résister au couple de rotation sur la poutre longitudinale (1), la poutre en porte-à-faux (3) étant réalisée et montée de sorte que lors d'une collision frontale elle recueille l'énergie avec un faible débordement et la transfère dans la poutre longitudinale (1).

2. Carrosserie de véhicule conforme à la revendication 1,
dans laquelle la poutre en porte-à-faux (3) est un élément de carrosserie fabriqué séparément de la poutre longitudinale (1) et est reliée à cette poutre longitudinale (1), par exemple par un assemblage soudé (9), un assemblage rivé ou un assemblage vissé.

3. Carrosserie de véhicule conforme à la revendication 1 ou 2,
dans laquelle entre une extrémité libre (4) de la poutre en porte-à-faux (3) et un support transversal de pare-chocs (7) est monté un élément de structure embrayable (11, 13).

4. Carrosserie de véhicule conforme à la revendication 3,
dans laquelle l'élément de structure embrayable (11, 13) est réalisé de sorte qu'il soit fixe, en cas d'un impact avec une vitesse supérieure à une vitesse de seuil, et qu'il soit mobile en cas d'un impact avec une vitesse inférieure à la vitesse de seuil.

5. Carrosserie de véhicule conforme à l'une des revendications précédentes,
dans laquelle sur le côté de la poutre longitudinale (1) opposé à la poutre en porte-à-faux (3) est monté un élément d'appui (15) de sorte qu'il soutienne latéralement la poutre longitudinale (1) en présence d'une sollicitation de la poutre en porte-à-faux (3) par une collision frontale.

6. Carrosserie de véhicule conforme à l'une des revendications précédentes,
dans laquelle un élément de traction (17) relie l'extrémité libre (4) de la poutre en porte-à-faux (3) avec le support transversal de pare-choc (7) dans la zone de la poutre longitudinale (1).

7. Carrosserie de véhicule conforme à l'une quelconque des revendications précédentes, comprenant une poutre longitudinale gauche et une poutre longitudinale droite (1, 1) ainsi qu'une poutre en porte-à-faux gauche et une poutre en porte-à-faux droite (3, 3).

8. Carrosserie de véhicule conforme à la revendication 7,
dans laquelle l'extrémité libre (4) de la poutre en porte-à-faux droite (3) est reliée au moyen d'un élément de traction (19) avec l'extrémité libre (4) de la poutre en porte-à-faux gauche (3), et l'élément de traction (19) s'étend au moins autour des extrémités avant de la poutre longitudinale droite et de la poutre longitudinale gauche (1.1).

9. Carrosserie de véhicule conforme à la revendication 8,
dans laquelle l'élément de traction (19) s'étend autour de la totalité du support transversal de pare-choc (17).

10. Carrosserie de véhicule conforme à l'une des revendications 7 à 9,
dans laquelle l'extrémité avant (4) de la poutre en porte-à-faux droite ou de la poutre en porte-à-faux gauche (3) est reliée à l'extrémité avant (4) d'une poutre d'appui droite ou gauche (23) d'un logement de roue droit ou gauche (5) au moyen d'un élément de traction de logement de roue droit ou gauche (21).

11. Véhicule équipé d'une carrosserie de véhicule conforme à l'une des revendications précédentes.
